# EUROPEAN PATENT APPLICATION

(11) **EP 2 490 122 A2**
(43) Date of publication of application: **22.08.2012**
(21) Application number: 11173934.8
(22) Date of filing: 14.07.2011
(51) Int. Cl.: G06F 11/14

(54) **Hardware turnkey mobility**

(30) Priority: 10.12.2010 US 928387; 14.02.2011 US 932005
(71) Applicant: Mitel Networks Corporation, Ottawa, ON K2K 2W7 (CA)
(72) Inventor: Tam, Terry, Ottawa, Ontario K1J 7V2 (CA)
(74) Representative: Venner Shipley LLP

(57) **Abstract**

A system and method for producing a factory build of an embedded appliance is disclosed. The method comprises providing an embedded appliance having first and second digital storage locations, with the second location including a boot manager and a recovery operating system. A factory image of operational software is copied to the secondary digital storage location. The embedded appliance is configured to boot from the second digital storage location at an initial startup and load a recovery operating system to copy the factory image to the primary digital storage location to enable the embedded appliance to operate from the operational section using the operational software.

## Description

The embedded / appliance system (E/A system) in the digital telephony industry is traditionally targeted for the Small and Medium Business (SMB) marketplace. This business space is characterized by low profit / high volume for sales for the vendors of the embedded / appliance telephony systems. To be successful in this marketplace, the telephony systems are typically designed to be low cost in terms of manufacturing and cost of ownership for the end customer. The systems are also designed to require a relatively low amount of support from the vendor.

If a customer requires fault tolerance for the data storage (e.g. hard drive) of an E/A telephony system, current implementations will include the use of a Redundant Array of Inexpensive Disks (RAID) system. With the small physical foot print of an E/A telephony system, there is usually only enough physical space for two 2.5 inch data storage devices. This will limit the implementation to a RAID 1 (mirror) type of system that can be used only for fault tolerance.

While RAID 1 is an effective method of protecting against a single drive failure, such failure has a very low probability of occurrence. The chance of a catastrophic hard drive failure that cannot be recovered by software is actually quite remote with the technology available today for enterprise rated drives. Typical hard drives available today for use in industrial applications have an unrecoverable error rate on the order of 1 in 1016, resulting in an average of 0.55% annual failures per year under normal environmental operating conditions. For a standard consumer grade hard drive, the unrecoverable error rate is 1 in 1014 with an annual failure rate of 0.5% under normal environmental operating conditions.

While the RAID system is useful in protecting against loss of data, the system precludes the use of the second storage device in an E/A telephony system from being used for other purposes. With the low probability of data loss, the second storage device may be of more use to a customer in reducing the cost of manufacturing, ownership, and support.

Features and advantages of the invention will be apparent from the detailed description which follows, taken in conjunction with the accompanying drawings, which together illustrate, by way of example, features of the invention; and, wherein:
Figure 1 illustrates a block diagram of a primary hard drive and a secondary hard drive configured in a redundant array of inexpensive disks (RAID) format;
Figure 2 illustrates a block diagram of a primary hard drive and a secondary hard drive configured to provide partial fault tolerance in a server in accordance with an embodiment of the present invention;
Figure 3 illustrates a block diagram of the server of Figure 2 in accordance with an embodiment of the present invention;
Figure 4 illustrates a block diagram of an embedded appliance in accordance with an embodiment of the present invention;
Figure 5 illustrates a block diagram of two systems, with each system having a first and second digital storage location in accordance with an embodiment of the present invention;
Figure 6 depicts a flow chart of a method for producing a factory build of an embedded appliance accordance with an embodiment of the present invention; and
Figure 7 depicts a flow chart of a method for migrating software across hardware platforms in accordance with an embodiment of the present invention.

Reference will now be made to the exemplary embodiments illustrated, and specific language will be used herein to describe the same. It will nevertheless be understood that no limitation of the scope of the invention is thereby intended.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter. The following definitions are provided for clarity of the overview and embodiments described below.

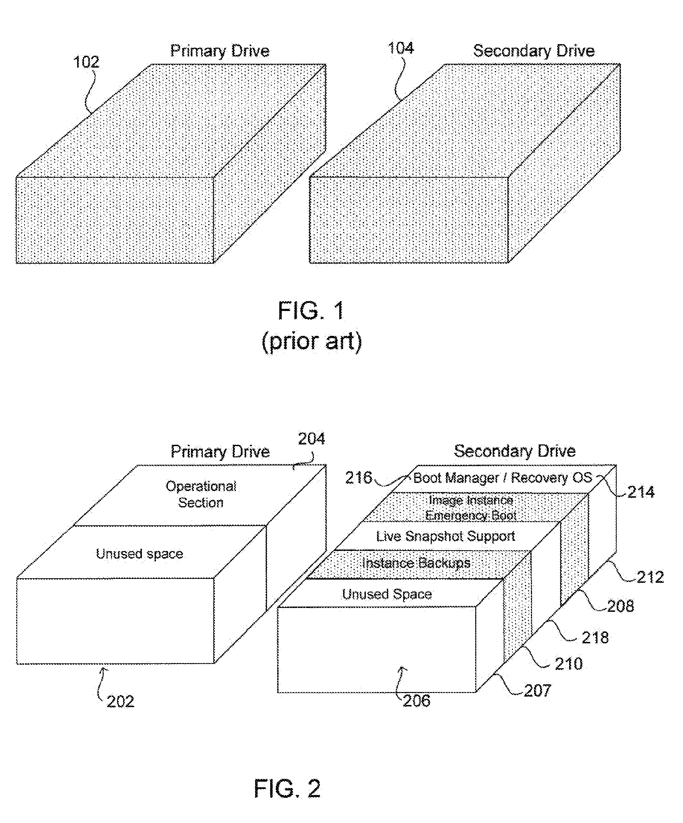

An embedded appliance, such as a telephony server, an application server, and the like, that is designed for use by a small or medium sized business is typically designed to be compact and inexpensive. To meet these requirements, the telephony server may include only two separate digital storage devices, such as hard drives. The second hard drive is typically used as a Redundant Array of Inexpensive Disks (RAID) system that is setup as a mirror to provide a redundant backup for the data stored on the first digital storage device. For instance, Figure 1 shows an example of a first hard drive 102 and a second hard drive 104. The two hard drives have substantially identical content. As data is created or copied onto the first drive, the data is mirrored on the second drive by the RAID system. If the first drive should fail then the data can be recovered on the second drive. However, using the second digital storage device to enable a RAID system eliminates the ability to use the second digital storage device for other purposes. Eliminating the RAID system and allowing the second digital storage device to be used for additional purposes may be of more benefit to a customer, as it can reduce the cost of manufacturing, ownership, and support for a digital telephony server or application server.

However, eliminating the RAID system does away with the ability to recover data on the slim chance of an occurrence of a fatal error of the first drive (i.e. a mechanical crash) or an unrecoverable read/write error (i.e. a software error). Many small and medium size businesses rely on the ability to recover data in the event of a catastrophic failure of the first hard drive on the server.

To overcome this limitation, a level of fault tolerance can be achieved by maintaining an image instance of the primary hard drive on the secondary hard drive. The space used on the primary hard drive for operational software (system software, application software, and data) is typically much less than the available storage space on the secondary hard drive.

For instance, in a voicemail system, such as the Mitel® NuPoint IP MessengerTM®, in an implementation for less than 50 users, the space used to store voicemail will typically have an upper bound of around 20 GB. A typical secondary hard drive can be configured to store on the order of 500 GB of data. When there is a catastrophic failure (hardware) on the primary drive, the server can be configured to attempt to automatically boot on the secondary hard drive and operate using an image instance of the operational software. If automatic reboot is not possible, a technician can manually boot for the last known snapshot via the boot manager on the second hard drive. This will be discussed in more details in the proceeding paragraphs.

Writing the image instance to the secondary hard drive provides significant advantages over storing the image instance on the primary hard drive. Writing the image instance to a partition on the primary hard drive can greatly reduce the primary hard drive throughput by a factor of 20 due to the random access seek penalties of the drive. Thus, the use of a secondary drive can significantly increase the speed at which the image instance can be created.

Figure 2 provides a block diagram illustrating one example embodiment of the present invention. The system software (i.e. operating system), the application software used to operate the server, and any data that is used or created by the OS and application software can be stored in the operational section 204 of a primary hard drive 202. The operational section may be contained in a single partition or multiple partitions on the primary hard drive. When the primary hard drive is operational, the server uses the operational section of the primary hard drive to operate. Typically, all data, such as voice mail files, communication server databases, application databases, and other types of user and application data are stored in the operational section of the primary hard drive.

In some embodiments of the present invention, an image instance of the operational section can be copied to a selected location on the secondary drive 206. An image instance is a copy of the digital information in the operational section at a selected point in time. For example, an image instance of the operational section, as it exists on a certain day at 12:00 PM, may be copied to an image instance emergency boot partition 208 on the secondary hard drive 206. The term "copy", as used herein, is considered to include any digital means for moving desired digital information from one location on a digital storage device to another location on the digital storage device or another digital storage device. The term "copy" can include compressing, archiving, uncompressing, and other types of actions that may be taken when moving digital information.

In some embodiments, copying the image instance can be accomplished in a two step process. The image instance can first be copied in a non-compressed form to a dedicated partition, such as the image instance emergency boot partition 208. Once it has been copied, a background compression implementation can be used to compress the image instance into one or more compressed file(s). The compressed files can be copied into a separate backup partition on the secondary drive 206, such as the instance backup partition 210.

In another embodiment, an image instance of the operational section 204 of the primary hard drive 204 can be directly compressed and stored in the instance backup partition 210 of the secondary hard drive 206. Once compressed, the background compression implementation can uncompress the instance image and store a copy of the uncompressed image in the image instance emergency boot partition 208. This embodiment can be used if the partition size on the primary hard drive 202 in which the operational section 204 is stored is larger than the partition size of the image instance emergency boot partition 208 on the secondary hard drive 206.

If the operational section 204 includes more than one partition then the steps above can be repeated. An image instance can be created for each partition in the operational section. The image instance can be compressed and stored on the secondary hard drive. Each instance from the operational section 204 can then be expanded in the image instance boot partition.

In some embodiments, the image instance emergency boot partition 208 can be split into sub-partitions to match with the partitions of the operational section 204. Alternatively, the partitions in the operational section may be flattened and the image instances in each partition in the operational section can be expanded into a single partition, such as the image instance emergency boot partition.

The mount information can then be adjusted to allow the partition to be valid. For instance, in a Linux operating system the system configuration file in the file systems table, commonly implemented as /etc/fstab, can be adjusted. The system configuration file can list all available disks and disk partitions. Information can also be included in the system configuration file indicating how the available disks and disk partitions are to be initialized or otherwise integrated into the overall system's file system.

Once the image instance(s) from the operational section 204 have been copied to the image instance emergency boot partition 208 and expanded, a single flat partition for the image instance emergency boot can be used. In this example, the swap partition can be disabled. Disabling the swap partition is acceptable since the use of the files under the image instance emergency boot partition is only a temporary solution until a new primary hard drive can be installed or repaired in the server. For real-time applications, systems are allocated so that real memory is enough so that the swap partition is not used. In some situations software applications may require licensing to operate. If necessary, the licensing information can be adjusted to allow the software in the image instance emergency boot partition to be valid, as can be appreciated.

In some embodiments, selected applications and data contained in the operational section 204 may not be necessary to copy. Much of the data on the primary hard drive may not be required when running the server in an emergency mode. In general, the server will run in emergency mode using the image instance in the image instance emergency boot partition 208 only long enough for a technician to replace the damaged primary hard drive 202 or correct the hardware or software problem that kept the server from accessing the operational section 204 of the primary hard drive. Thus, existing files in the operational section such as logs, core files, installation files, and temporary files may be omitted when creating an image instance to place in the image instance emergency boot partition on the secondary hard drive.

Depending on the type of operating system that is used on the primary drive 202, the drive mapping of selected files in the image instance may need to be changed. In one example embodiment, once the image instance has been placed in the image instance emergency boot partition 208, the drive mappings can be changed to enable the operating system and application software to operate on the secondary hard drive 206. For instance, in a Linux Operating System, the drive mappings can be changed by updating the system configuration file in the file systems table that typically lists all available disks and disk partitions, and indicates how they are to be initialized or otherwise integrated into the overall system's file system. The system configuration file can be updated to list the available secondary disk.

Alternatively, a compressed image instance from a specific time can be placed in the image instance emergency boot partition and uncompressed. The uncompressed image instance can then be remapped as needed to allow the software to operate on the secondary hard drive 206.

The secondary hard drive 206 can include a boot manager 216 and a recovery operating system (OS) 214. In some embodiments, the boot manager and recovery OS can be located in a separate partition 212 on the secondary hard drive. However, it is not necessary to locate the boot manager and recovery OS in a separate partition.

In another embodiment, the image instance in the image instance emergency boot partition 208 may not be remapped each time an image instance is copied into the partition. Instead, an application, such as an application run by the recovery OS 214, can be used to remap the software in the image instance that is located in the image instance emergency boot partition 208. The application can be run when the recovery OS is used in the event of a crash or failure of the primary hard drive 204. This reduces the need to update the mapping of the image instance each time it is copied.

When the operational section 204 on the primary hard drive 202 becomes inaccessible, the server can be configured to operate using an image instance of the operational section that is located on the secondary hard drive 206.

The secondary hard drive can further comprise unused space 207. As previously discussed, modern hard drives have a very large amount of storage space. The unused space on the secondary drive can include additional partitions and/or uses beyond what is shown in Figure 2 and described above.

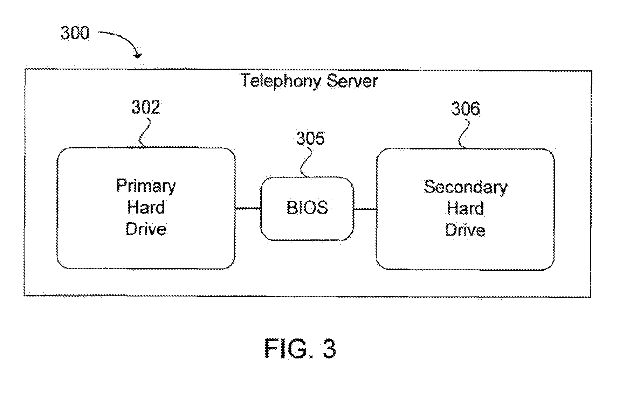

Figure 3 is a block diagram illustrating one example of a server 300 having a primary hard drive 302 and a secondary hard drive 306. The hard drives are typically connected to a Basic Input/Output System (BIOS) 305. The BIOS may be replaced by an extensible firmware interface (EFI) or other type of interface that is configured to start the operating system. The BIOS typically provides a small library of basic input/output functions used to operate and control the peripherals such as the hard drives, keyboard, text display functions and so forth. When the server is first powered on, the BIOS is configured to use a boot manager on the primary hard drive to run the operating system and applications in the operational section of the primary hard drive 302 to operate the server.

The operational section of the primary hard drive 302 may become inaccessible for at least two reasons. First, a mechanical failure of the primary hard drive may occur. When the mechanical failure occurs, the result may be that the BIOS 305 may no longer recognize that the primary hard drive is present in the server.

A second reason the operational section may become inaccessible is due to the inability of the primary hard drive 302 to access the information stored in the operational section. The hard drive may not be able to access the information in the operational section due to software problems, read/write errors on the hard drive, or problems with the magnetic surface of the hard drive. Additional problems may also disable the hard drive's ability to access the operational section, such as problems with the motherboard, power supply, and so forth, as can be appreciated.

When the primary hard drive 302 is still operating, but the information on the hard drive is inaccessible, the BIOS may still recognize the primary hard drive and attempt to boot to the primary hard drive. Since the information cannot be accessed, the operating system may not load properly, resulting in the inoperability of the server 300.

When the operational section on primary hard drive 302 becomes inaccessible, the server 300 can be rebooted. If the inaccessibility is caused by a hardware failure, wherein the primary hard drive is not recognized by the BIOS 305, then the BIOS in the server can be configured to automatically boot on the secondary drive 306 using the boot manager.

Returning to Figure 2, the boot manager 216 on the secondary hard drive 206 can load the operating system in the image instance stored on the secondary hard drive 206 to operate the desired application software that is also included in the image instance. In some embodiments, the boot manager can be configured to use the image instance stored in the image instance emergency boot partition 208 as the default partition. This enables the server to quickly recover from a catastrophic failure of the primary hard drive. Simply rebooting the server can enable the server to operate in an emergency mode on an image instance that was copied to the secondary hard drive until a technician is able to restore or replace the primary hard drive's functionality.

When the primary hard drive's 202 failure is due to a software error, read/write error, or problems with the magnetic surface of the hard drive that keep the data in the operational section 204 from being accessed, the BIOS 305 (Figure 3) may still recognize the primary hard drive 202 even though the desired data cannot be read. In this case, a technician can manually use the BIOS to reboot the server using the boot manager 216 on the secondary hard drive 206 to load the operating system in the selected image instance. The technician can accomplish this either remotely or on-site. The operating system can then be used to run the system software, application software, and access the data in the image instance that was copied to the secondary drive 206, as previously discussed.

When the operational section 204 on the primary hard drive 202 becomes inaccessible, a technician can be alerted to the problem. The technician can repair or replace the primary hard drive 202. The image instance(s) stored on the secondary hard drive 206 can then be used to restore the operational section on the primary hard drive to an operating condition. This can be accomplished by instructing the boot manager 216 on the secondary hard drive to load the recovery operating system 214. The recovery operating system can be used to copy an image instance from the secondary hard drive 206 to the primary hard drive to restore the operational section.

In some embodiments, the last image instance of the operational section 204 that was copied to the secondary drive can be located in the image instance emergency boot partition 208. The technician can use this last image instance to enable the operational section to be restored with the most up to date data available. For instance, the image instance emergency boot partition 208 may contain an image instance of the operational section as it existed after a company's closing time on the prior day.

In another embodiment, the technician may desire to restore a different image instance of the operational section than the most current copy. This may be needed, for example, if the data became corrupted or a software upgrade did not work properly. In this case, the technician may select a desired image instance from the instance backup partition 210. The desired image instance may have been compressed using a lossless data-compression algorithm such as the Lempel-Ziv-Oberhumer (LZO) algorithm or another type of lossless data compression. The compressed data may need to be uncompressed into the image instance emergency boot partition 208 prior to restoring it to the primary hard drive 202. Alternatively, the compressed image may be copied to the primary hard drive and then uncompressed.

Once the image instance has been copied from the secondary hard drive 206 to the primary hard drive 202 and uncompressed, if necessary, the drive mapping of selected files in the image instance may need to be changed to allow the software to operate on the primary hard drive. If the files in the image instance were previously remapped to operate on the secondary hard drive 206 then the same process that was previously discussed can be used to remap the selected files to again operate on the primary hard drive 204.

In some embodiments, only the image instance stored in the image instance emergency boot partition may be remapped. The image instance(s) stored in the instance backup partition 210 may not be remapped. Thus, if the image instance is restored from the instance backup partition 210 to the primary hard drive 204 then no remapping may be needed.

In another embodiment, the server may operate for an extended period of time from an image instance, such as the image instance stored in the image instance emergency boot partition 208, before a technician is able to fix or replace the primary hard drive 204. This period of time may last up to several hours of time, or even longer depending on the availability of a technician. During the time that the server is operating from an image instance on the secondary hard drive 208 a significant amount of data may be recorded. The recorded data from the secondary hard drive can be copied to the primary hard drive after an image instance has been restored to enable the primary hard drive to include the most recent data.

Once the image instance has been restored to the primary hard drive 204 then the server can then be rebooted and the BIOS can boot from the primary hard drive and use the information in the operational section 204. The operational section of the primary drive can then be used to operate the server. Thus, not only can the image instance of the operational section be used to operate the server when the primary hard drive fails. Once the primary hard drive has been fixed or replaced, the image instance can also be used to restore the operational section to the primary hard drive and enable the server to operate normally.

In one example implementation, the server 300 (Figure 3) can be configured to operate using a Linux operation system such as the Mitel Standard Linux Operating System. Linux has a built in live snapshot mechanism referred to as a Logical Volume Manager (LVM) that enables an image instance to be created while the server is operating. The LVM snapshot mechanism is a Copy on Write (COW) mechanism that keeps track of all of the block deltas of a write in a separate partition. In some embodiments, the partition can be created on a separate hard drive, such as the live snapshot support partition 218 on the secondary hard drive 206. Writing the block deltas to a partition on the primary hard drive can greatly reduce the primary hard drive throughput by a factor of 20 due to the random access seek penalties of the drive. Therefore, they are written to the secondary hard drive 206. The block deltas can be used to track any changes that occur to the operational section 204 of the primary hard drive 202 after the creation of the image instance (live snapshot) has started. Any changes can be removed from the image instance, allowing the operational section to be copied as it existed at a selected moment in time.

The snapshot backup can either be invoked manually via a user interface or performed via a scheduled snapshot backup mechanism. When a snapshot is performed, a number of operations can occur. An event can be sent to operating software applications on the primary hard drive 202. The event can ensure that all dependent data is synchronized. An operating system sync command can be issued to ensure that file buffers are flushed. The LVM snapshot partition can be setup and a snapshot of the root partition on the primary hard drive 202 can be created. The boot partition can be backed up using a Tar (tape archiver) system and LZO compression to create a file on the instance backup partition 210. It should be noted that the boot partition can be a regular partition containing a GRand Unified Bootloader (GRUB) boot manager that does not require special treatment by the LVM. The contents of this partition typically do not change in runtime. Changes are only made during an upgrade. System backups do not typically occur during a system upgrade operation.

The snapshot root partition containing the MSL operating system, Mitel Applications Suite software, and Mitel Communications Director software can be backed up using Tar and LZO compression to the instance backup partition 210. Once the backup is complete, the live snapshot support partition 218 can be released. A background task can then expand the backup into the image instance emergency boot partition 208 and strip out irrelevant information such as logs, temp files, core files, and so forth that are not needed for an emergency boot situation. The boot partition mount in the root partition can then have the links resolved in the image instance emergency boot partition. This can be accomplished by copying the contents of the boot partition on the primary hard drive to a "/boot" directory in the image instance emergency boot partition.

In some embodiments the server 300 (Figure 3) may not be field serviceable. That is, if the primary hard drive fails then a new server may be used to replace the server with a failed hard drive rather than attempting to repair the server in the field. If this occurs then the image instance from the secondary hard drive in the original server may be copied to the secondary hard drive in the new server using, for example, a network connection to both servers, or an external USB memory device to transfer the image instance. A technician can then use the boot manager 216 and recovery OS 214 to copy the image instance from the secondary drive 206 to the primary drive 202 over the original operational section 204. Thus, the image instance on the secondary hard drive can be copied to a new server to enable the new server to operate just as the damaged server did at the time the image instance was created.

The ability to restore an image instance of the operational section from the secondary hard drive 306 to the primary hard drive 302 in a server 300, and operate from the restored operational section, can provide significant additional advantages to a customer. In one example embodiment, a customer can perform upgrades on multiple servers by making an upgrade to a single server and copying an image instance of the operational section having the upgrade. The image instance of the operational section can then be copied to the secondary hard drives of the servers that are desired to receive the upgrade. The image instance can be "restored" to the primary hard drive on each server to replace the server's original operational section, as previously discussed. The ability to perform upgrades in this manner can be substantially faster and more uniform than if each server was individually upgraded.

For instance, a server dealer may sell 100 servers to company X to be installed by a dealer. Dealer A discovers that each installation requires a special dialling plan for the new region. Individually setting up the special dialling plan on each server can take an extra 20 minutes per server, or over 33 hours.

To reduce this time, the installation may be performed on the first server and the special dialling plan can be setup. Any licensing that may exist on the system can be removed and the system can be reset to an initial provisioning state, if necessary. The temporary files can be removed and the log system can also be cleaned to an initial state. An image instance of the operational section can then be taken and copied to the secondary drives of each of the 99 remaining servers. The time to copy the image instance can be on the order of 2 ― 4 minutes, depending on the amount of data. The technician installing the servers can then boot from the secondary hard drive and use the recovery OS to restore the image instance to the primary hard drive. The restoration may take on the order of 4-5 minutes. Thus, the ability to use the image instance to update the software on each server can save approximately 11-14 minutes per server, or 18 hours to 23 hours for the total installation. In addition, the use of the image instance significantly reduces the possibility of a technician incorrectly setting up the special dialling plan on one or more of the 100 servers due to typing mistakes or other forms of technician error. This can provide significant savings and a potential increase in productivity for the customer that purchases the servers.

In addition, the task of updating the additional 99 systems can be accomplished at the dealer's lab before going to the customer's site. The dealer can typically employ a lower skilled worker to copy the files onto the 99 systems. Thus, a skilled technician is only needed to create the initial image instance. A lower skilled worker can then update the remaining systems, thereby significantly reducing labour costs and reducing the amount of time the technician spends on-site to install the servers.

This example is not intended to be limiting. A wide number of alterations or upgrades may be performed on to the software in the operational section of a primary drive and transferred to other servers to allow them to be updated the same.

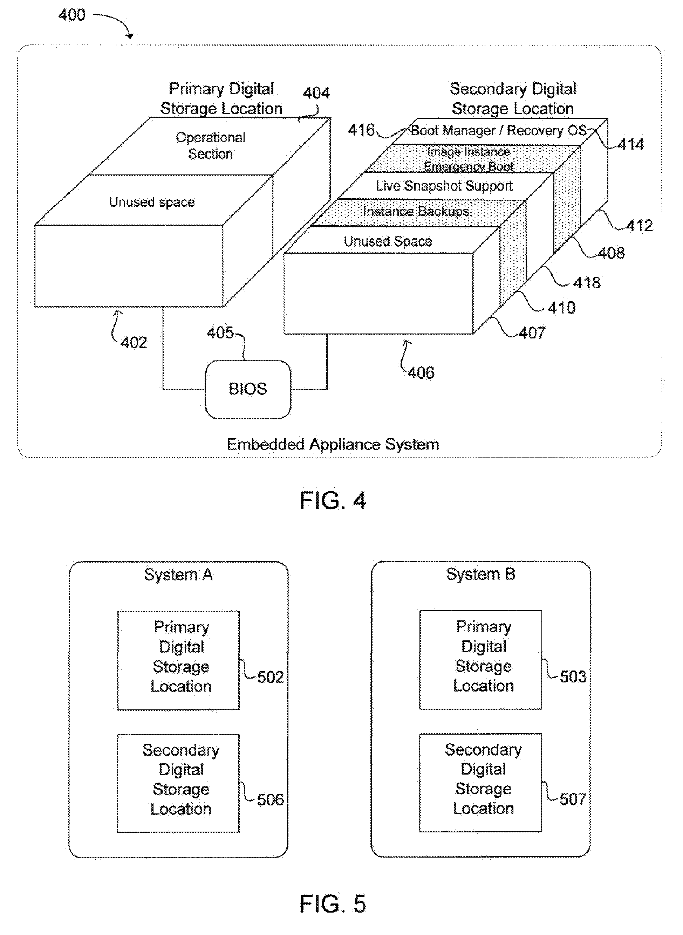

In another example embodiment, Figure 4 illustrates an embedded appliance system 400 that comprises a primary digital storage location 402 and a secondary digital storage location 406, each in communication with a BIOS 405 or other type of firmware interface such as an EFI. The embedded appliance system may be a telephony server, an application server, or another type of embedded appliance. The first and second digital storage locations may be separate hard drives. Alternatively, the first and second storage locations may be located on one or more solid state drives or other types of digital memory such as a holographic digital storage device, magnetic random access memory, memristive random access memory, and so forth.

An embedded appliance system 400 is typically manufactured to operate as a turnkey product that is designed to be delivered to a purchaser in a ready-to-use condition. Accordingly, the primary digital storage location 402 of a turnkey system includes an operational section 404 that has been installed and prepared for use. Similarly, the secondary digital storage location 406 is preconfigured to allow the purchaser to create and save image instances, boot from the secondary digital storage location, if necessary, using the boot manager 416, and copy a selected image instance using the recovery OS 414. The time and labour needed to preconfigure and install the desired software on primary 402 and secondary 406 digital storage locations can be relatively expensive.

### Physical or Virtual Hardware Migration

Hardware migration is commonly defined as the act of moving software from one hardware platform to another hardware platform. The hardware platform may be either physical hardware or virtual hardware. Virtual hardware is software and hardware that are used to emulate a desired hardware environment. One example of software that can be used in conjunction with hardware to emulate a predetermined hardware environment is VMWare. Other types of virtualization software are also available.

A manufacturer can design and test a physical hardware setup or a virtual hardware setup to operate with the software that is designated to run on the hardware. The software may be designed to run on a number of different hardware setups. The manufacturer typically designs (or includes) software drivers that enable the software to communicate with the hardware operating in the setup.

A typical example of a hardware migration process involving two separate hardware systems is described. The hardware systems are considered to be manufacturer supported hardware that has previously been tested and/or is considered to be compatible with the manufacturer's software. In this example the systems are referred to as System A, on which the current system software is operating, and System B, which is a new hardware platform to which System A will be migrated. The process of hardware migration typically involves making a data backup of the data on System A. The system software is then installed on System B, typically including an operating system and application software. The software installed on System B is typically the same software running on System A or an updated version of the software. A data restore can then be performed on System B using the data from the backup of System A. The process of installing the operating system and files and then restoring the data can take hours of time. When virtualization software, such as VMWare is operating, the hardware migration process typically only allows a migration from physical hardware to virtual hardware. However, a migration from virtual hardware to physical hardware is typically not supported.

In accordance with one example embodiment of the present invention, turnkey hardware mobility can be provided using the system 400 to enable physical or virtual hardware migration in a limited amount of time from one hardware platform to another hardware platform.

Figure 5 provides one example illustration of two hardware platforms, System A and System B. System A includes a primary digital storage location 502 and a secondary digital storage location 506. System B also includes a primary digital storage location 503 and a secondary digital storage location 507. The digital storage locations in System A and System B may be the same or different. System A and System B can be either physical or virtual. It is assumed, in this example, that the primary and secondary digital storage locations are setup the same as the primary digital storage location 402 and secondary digital storage location 406 shown in Figure 4. The setup in Figure 4 is referred to with respect to the systems illustrated in Figure 5.

In one example embodiment, an image instance can be made of an operational section 404 of the primary digital storage location 502 and recorded onto the secondary digital storage location 506 on System A. The image instance can then be copied from the secondary storage location 506 on System A to the secondary storage location 507 on System B. An image instance restore can then be performed on System B, copying the image instance from the secondary storage location 507 to the primary digital storage location 503 on System B. This can be accomplished by booting System B from a boot manager 416 on the secondary digital storage location 507 and loading a recovery operating system 414. The recovery operating system can be used to copy the image instance from the secondary digital storage location 507 on System B to the primary digital storage location 503 in system B.

In another example embodiment, System B can contain unknown hardware that has not been tested by the manufacturer and the supporting driver packages are not included in the image. An image instance can again be recorded from the primary digital storage location 502 to the secondary digital storage location 506 of System A. The image instance can then be copied to the secondary digital storage location 507 on System B. System B can be booted from a boot manager 414 on the secondary digital storage location and a recovery operating system 414 can be loaded to copy the image instance from the secondary digital storage location 507 on System B to the primary digital storage location 503 in system B.

As previously discussed, copying the image instance can be accomplished in a matter of minutes, thereby enabling the software of System A to be migrated to the hardware on System B in a time that is typically less than thirty minutes. This is substantially faster than the hour(s) it can take to install operating systems and application software, followed by transferring backup data, as previously discussed.

In another example, the secondary digital storage location 507 on System B can include an instance backup sector 410 that may include one or more image instances. For example, the instance backup sector may also include an image instance which was copied from the primary digital storage location 503 on System B. System B may include hardware that was not tested by the manufacturer and supporting driver packages are not included in the image copied from System A. In this example, an image instance copied from the secondary digital storage location 506 on System A to the secondary digital storage location 507 on System B can be restored on System B by using the recovery operating system 414 (Figure 4) on the secondary digital storage location 507 to copy the image instance to the primary digital storage location 503.

The operating system in the image instance can be configured to perform a "rescue operation", in which missing drivers can be installed to System B. Once the image instance has been copied to the primary digital storage location 503 then the "rescue operation" can be performed on the primary digital storage location 503 to load drivers for the hardware on System B that was not included in the image instance. If the operational software on the primary digital storage location is still not functioning after the rescue operation then System B can again be booted from the secondary digital storage location 507. The recovery operating system 414 can be used to copy the last image instance, which was copied from the primary digital storage location 503 to the instance backup sector 410 on the secondary digital storage location 507. This last backup can be copied back to the primary digital storage location 503. This enables System B to be restored to its previous state prior to migrating the software of System A to the untested hardware on System B. The ease with which the system can be restored enables the software to be migrated to a system having untested hardware with minimal disruption to the operation of the system.

Turnkey hardware mobility using image instances copied to the secondary digital storage location of a new hardware platform, which can be restored to the primary digital storage location of the new hardware platform, offers significant advantages over the traditional method of installing software. Copying and restoring an image instance is a simple operation that is substantially reliable with a very low probability of error. The simplicity of the operation enables those with lower skill to be able to migrate software between machines, thereby providing a potential savings in labour costs. Image instance backups and restores are fairly quick. In addition, turnkey hardware mobility enables software to be migrated from physical hardware to physical hardware, from physical hardware to virtual hardware, and from virtual hardware to physical hardware with minimal effort. This is a substantial improvement over the complex tools and expert knowledge that is typically needed when migrating software between physical hardware and virtual hardware.

In accordance with another example embodiment of the present invention, the time and labour to pre-configure and install software on a turnkey embedded appliance system 400 can be significantly reduced by eliminating redundant copies made in a factory install, as shown in Figure 4. For example, the operational section of the primary digital storage location 402 can be left blank. In some embodiments, the entire primary digital storage location can be left blank. The system can be placed in a primary digital storage location failed state that allows the BIOS 405 to boot to the secondary digital storage location.

When a purchaser from the factory first activates the embedded appliance in the primary digital storage location failed state it can be configured to operate from the boot manager 416 on the secondary digital storage location 406 and load the recovery operating system 414. The recovery operating system can be configured to copy a factory image from the secondary digital storage location 406 to the operational section 404 on the primary digital storage location 404. A factory image includes the operational software used to operate the embedded appliance. The factory image can be preloaded during the manufacturing process. The factory image may be located in the emergency boot partition 408 or the instance backup partition 410, as previously discussed. The embedded appliance can then be rebooted and enabled to operate using the operational software located in the operational section 404 on the primary digital storage location.

Installing the operational software in the operational section 404 by copying the factory image from the secondary digital storage location provides a number of benefits. As previously discussed, the time and cost used for primary digital storage location duplication for each embedded appliance is eliminated. Thus, only copying of the factory image is necessary.

Final assembly of products is typically accomplished within the region of sale. Thus, the factory may only have to copy a single variant of the factory image to the secondary digital storage location. If the primary digital storage location does need to have software copied on it during the factory build process, it is typically much faster to copy the software by restoring a factory image (approximately 2 minutes) than using a standard copying process, such as disk cloning, which can take up to several hours if every track on the drive is cloned.

Upgrading or changing software on a selected hardware platform in a software environment is referred to as software migration. Software migration on an embedded appliance system to a new software base is traditionally a prolonged and arduous task. The process of migration can involve performing a major update of the software including the operating system. This may be accomplished in person or from a remote location. The process can take hours to complete. The embedded appliance is typically non-operational during the upgrade. Software migration can also include a complete format and reinstall of the system. This process can also take hours to accomplish. Any time formatting is involved then the embedded appliance will be non-operational.

The ability to copy a selected image instance from the secondary digital storage location 406 can significantly reduce the time needed to perform a software migration on an embedded appliance 400. In accordance with one example embodiment, software migration on the embedded appliance can be accomplished by copying an image instance for a desired software migration to the secondary digital storage location 406. The image instance for the desired software migration may be copied to the instance backup partition 410 or another desired location. This can be done in real time via a network connection or via a removable mass storage device connected to the embedded appliance. The selected image instance may be a new factory image.

In some embodiments, the image instance for a desired software migration can be downloaded automatically via software designed to be integrated with the embedded appliance. For instance, the embedded appliance may communicate with the Mitel Live Image framework, which can automatically communicate with embedded appliances via network communication. The Mitel Live Image framework can be configured to be aware of the version and/or country variant of software used by the embedded appliance and provide a correct factory image that matches the country variant used by the embedded appliance.

A system and application backup can be performed on the embedded system. The backup can include a backup of data to the secondary drive. The data can be stored at a desired location, such as the instance backup partition 410.

In some embodiments, the embedded appliance system 400 is configured to continue to operate while the image instance for the desired software migration is copied to the secondary digital storage location 406 and the backup of the data is performed. Once the backup is completed and the image instance for the software migration has been fully downloaded or copied then the embedded appliance system is ready to migrate.

When a technician is ready to migrate the system to the new software base then the technician can merely copy the image instance from the secondary digital storage location 406 to the primary digital storage location 402 using the recovery operating system 414, as previously discussed. In some embodiments, a system and application data restore can then be performed to restore the data from the secondary digital storage location to the primary digital storage location. The restoration of the backup data may be accomplished manually by the technician or automatically by the system.

The overall time for installing a new software migration is the time it takes to copy the image instance and restore the data backup. This time is typically less than about 10 minutes, significantly faster than the multiple hours that a software restoration can take using traditional methods.

In one example embodiment, an embedded appliance system 400 can be configured to automatically download updates. The system will be ready to migrate to the new software prior to a technician arriving on site to perform a major migration. The technician can perform a backup of data application, which typically takes a few minutes. The technician can then reboot the embedded appliance and boot from the secondary digital storage location 406 using the boot manager 416 to load the recovery operating system 414. The technician can then use the recovery OS to copy the image instance for the software migration to the operational section 404 of the primary digital storage location 402. Once that has been completed, the system can either automatically restore the backup data or the technician can instruct the system to restore the backup data. The overall reduction in time can provide significant time and cost savings for maintaining the embedded appliance.

The embedded appliance 400 can be configured to operate in multiple countries. Each country may have different operating parameters and procedures. For instance, the embedded appliance may be a telephony server. The telephony system within different countries and/or regions within countries may operate differently. To configure the embedded appliance to operate in a selected country, or region of a country, the software can be configured to be in compliance with the telephony system of the region in which it will operate.

To support multiple countries or regions, additional steps are taken during initial provisioning to configure the embedded appliance system to match a specific region. This can be a fairly time intensive and potentially error prone process when dealing with complex systems such as an embedded appliance that is a digital telephony server.

In one example, the provisioning process can be accomplished with the aid of a provisioning wizard application for a product such as the Mitel Communications Director product. The configuration for this product can take more than ten minutes to perform initial provisioning and setting country specific information. The provisioning time is greatly increased when multiple applications are combined on an embedded appliance system since each application is typically separately configured for the specific country or region. The configuration may be accomplished manually by a technician or automatically using a wizard-like application.

In another embodiment, an embedded appliance system 400 can be configured to operate for a selected country or region by merely copying an image instance or a factory image from the secondary digital storage location 406 to the primary digital storage location 402. The factory image can be preconfigured to operate in the selected country or region. In addition, the factory image can include a number of different applications, with each application setup to operate in the selected country or region. This enables the time it takes to setup a system to operate in a specific country or region to be limited to the time it takes to copy the factory image for the specific country or region. In one test, the time to copy the factory image was approximately two minutes. In addition to the substantial time savings obtained, the ability to copy a factory image that is preconfigured can substantially reduce the number of complications and potential mistakes made in setting all applications to a specific country code.

The embedded appliance system 400 can include a number of different factory images recorded on the secondary digital storage location 406. To reduce the amount of space needed to store multiple factory images, regional groupings can be created. The embedded appliance system can be configured to operate within a selected geographic area. The number of factory images recorded on the secondary digital storage location can be limited to countries or regions within the geographic area. The factory can load the factory images onto the secondary digital storage location 406 of the embedded appliance 400 for the countries or regions within the geographic area in which the embedded appliance will be sold. A vendor can configure the embedded appliance to operate in a selected country or region by merely selecting the appropriate factory image associated with the selected region and copying that factory image from the secondary digital storage location to the primary digital storage location 402 upon initial startup of the embedded appliance.

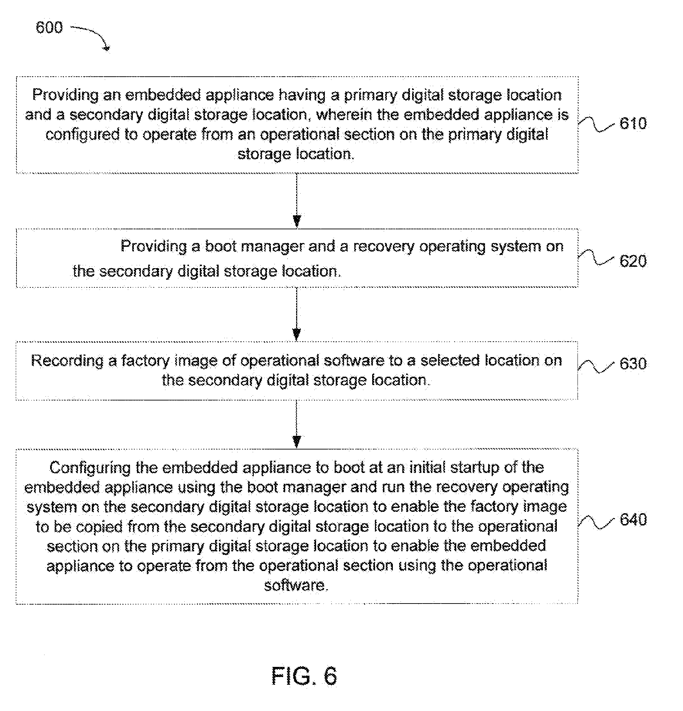

Once the desired factory image has been copied to the primary digital storage location 402 and the embedded appliance 400 is operating within set parameters, the remaining factory images for other regions may be removed from the secondary digital storage location to provide additional storage space. In another embodiment, the remaining factory images may be removed when the secondary digital storage location reaches a predetermined recording level, such as 80% full. At this point, a technician may be queried to allow the non-relevant country specific factory images to be removed. Alternatively, they may be automatically removed. In another embodiment, a method 600 for producing a factory build of an embedded appliance is disclosed, as depicted in the flow chart of Figure 6. The method comprises providing 610 an embedded appliance having a primary digital storage location and a secondary digital storage location. The embedded appliance is configured to operate from an operational section on the primary digital storage location. A boot manager and a recovery operating system are provided 620 on the second digital storage location. A factory image of the operational software is recorded 630 to a selected location on the secondary digital storage location.

The method 600 further comprises configuring 640 the embedded appliance to boot at an initial startup of the embedded appliance using the boot manager and run the recovery operating system on the secondary digital storage location to enable the factory image to be copied from the secondary digital storage location to the operational section on the primary digital storage location. This can enable the embedded appliance to operate from the operational section using the operational software.

For example, in some embodiments, a factory can build a plurality of embedded appliances that are configured as telephony servers. The factory can install a first hard drive to operate as the primary digital storage location and a second hard drive to operate as the secondary digital storage location. The second hard drive can be setup to include a boot manager and a recovery operating system. One or more factory images can be recorded to the second hard drive of each embedded appliance. Each factory image can include all of the software needed to operate the embedded appliance as a telephony server in a selected geographic region.

The factory can configure the BIOS to boot the embedded appliance at an initial startup using the boot manager on the second hard drive to load the recovery operating system. When a purchaser first activates the embedded appliance, the recovery operating system can copy a selected factory image from the second hard drive to the primary hard drive. The selected factory image may be for a selected region or country. The embedded appliance can then be rebooted to boot from the first hard drive and load the operational software from the first hard drive to allow the embedded appliance to operate as a telephony server configured to operate in the selected geographic region.

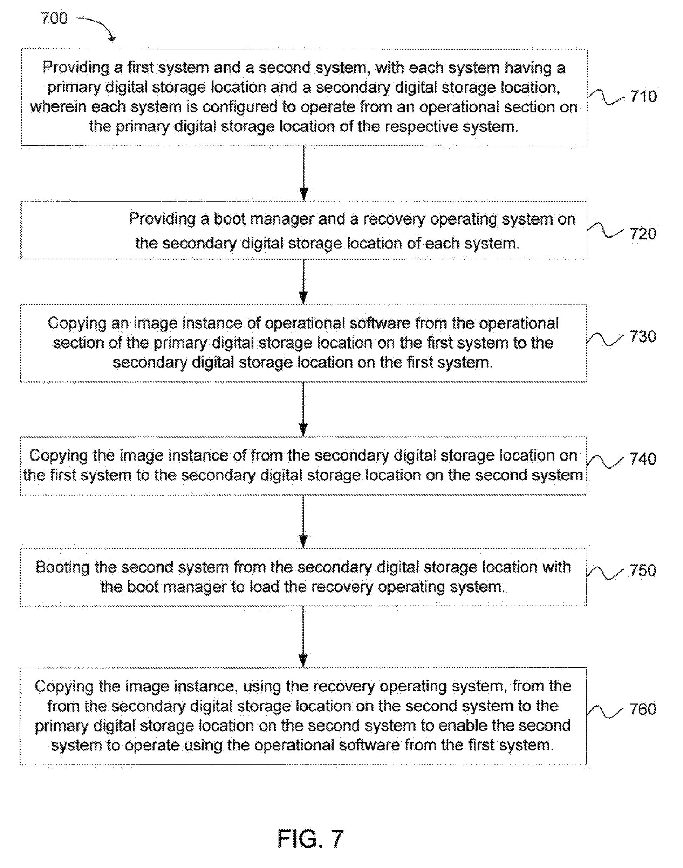

In another example embodiment, a method 700 for migrating software across hardware platforms is disclosed, as depicted in the flow chart of Figure 7. The method comprises providing 710 a first system and a second system, with each system having a primary digital storage location and a secondary digital storage location. Each system is configured to operate from an operational section on the primary digital storage location of the respective system. A boot manager and a recovery operating system are provided 720 on the secondary digital storage location of each system.

The method 700 further comprises copying 730 an image instance of operational software from the operational section of the primary digital storage location on the first system to the secondary digital storage location on the first system. The image instance is then copied 740 from the secondary digital storage location on the first system to the secondary digital storage location on the second system.

The method 700 further comprises booting 750 the second system from the secondary digital storage location with the boot manager to load the recovery operating system. The image instance is copied 760, using the recovery operating system, from the secondary digital storage location on the second system to the primary digital storage location on the second system to enable the second system to operate using the operational software from the first system. The first and second systems can be comprised of physical hardware or virtual hardware, as previously discussed.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labelled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "some embodiments" or "an embodiment" means that a particular feature, structure, or characteristic described in connection with the embodiment is included in at least some embodiments of the present invention. Thus, appearances of the phrases "in some embodiments" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Various techniques, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method for producing a factory build of an embedded appliance, comprising:
providing an embedded appliance, for instance a telephony server or an application server, having a primary digital storage location and a secondary digital storage location, wherein the embedded appliance is configured to operate from an operational section on the primary digital storage location;
providing a boot manager and a recovery operating system on the secondary digital storage location;
recording a factory image of operational software to a selected location on the secondary digital storage location; and
configuring the embedded appliance to boot at an initial startup of the embedded appliance using the boot manager and run the recovery operating system on the secondary digital storage location to enable the factory image to be copied from the secondary digital storage location to the operational section on the primary digital storage location to enable the embedded appliance to operate from the operational section using the operational software.

2. The method of claim 1, further comprising providing the embedded appliance, wherein the primary digital storage location and the secondary digital storage location are each a separate magnetic hard disk drive operating in the embedded appliance or wherein the primary digital storage location and the secondary digital storage location are separate locations on at least one solid state drive operating in the embedded appliance, , and alternatively or optionally wherein the primary digital storage location does not include any operational software prior to the initial startup.

3. The method of any preceding claim, further comprising recording the factory image of the operational software to the selected location on the secondary digital storage location, wherein the selected location is an instance backup partition on the secondary digital storage location.

4. The method of any preceding claim, further comprising copying the factory image of the operational software to the selected location on the secondary digital storage location, wherein the factory image is compressed to reduce a size of the factory image.

5. The method of any preceding claim, further comprising:
powering the embedded appliance for the initial startup to automatically load the recovery operating system on the secondary digital storage location using the boot manager;
copying the factory image of the operational software from the secondary digital storage location to the operational section of the primary digital storage location; and
configuring the embedded appliance to boot from the primary digital storage location and operate using the operational software located on the primary digital storage location.

6. The method of claim 5, wherein copying the factory image further comprises copying data that is recorded on the secondary digital storage location to the primary digital storage location.

7. The method of claim 5 or claim 6, further comprising
downloading an update image of operational software to the secondary digital storage location while the embedded appliance is operating from the operational software on the primary digital storage location;
booting the embedded appliance from the secondary digital storage location and loading the recovery operating system;
copying the update image of operational software from the secondary digital storage location to the operational section of the primary digital storage location; and
booting the embedded appliance from the primary digital storage location to operate the embedded appliance using the update image of the operational software.

8. The method of any preceding claim, further comprising recording a plurality of separate factory images on the second digital storage location, wherein each separate factory image is associated with a selected geographic region and contains information to allow the embedded appliance to operate within the selected region when the factory image for the selected region is copied to the primary digital storage location.

9. An embedded appliance system comprising:
an embedded appliance, for instance a telephony server or an application server;
a primary digital storage location in the embedded appliance;
a secondary digital storage location in the embedded appliance;
a boot manager and a recovery operating system located on the secondary digital storage location;
a factory image of operational software for the embedded appliance recorded on the secondary digital storage location; and
a firmware interface configured to, upon initial startup of the embedded appliance, run the boot manager to load the recovery operating system to copy the image instance of the operational software from the secondary digital storage location to an operational section of the primary digital storage location and enable the embedded appliance to operate from the operational section using the operational software.

10. The system of claim 9, wherein the secondary digital storage location further comprises an instance backup sector on which the factory image is stored.

11. The system of claim 9 or claim 10, wherein the primary digital storage location and the secondary digital storage location are each a separate magnetic disk hard drive, and/or wherein the primary digital storage location does not contain any operational software prior to the initial startup.

12. The system of any of claims 9 to 11, further comprising a plurality of factory images stored on the secondary digital storage location, wherein each factory image is associated with a selected geographic region and contains information to allow the embedded appliance to operate within the selected region when the factory image for the selected region is copied to the primary digital storage location.

13. The system of any of claims 9 to 12, wherein the firmware interface is further configured to boot the embedded appliance system to the primary digital storage location after the factory image has been copied to the primary digital storage location.

14. A method for migrating software across hardware platforms, comprising:
providing a first system and a second system, with each system having a primary digital storage location and a secondary digital storage location, wherein each system is configured to operate from an operational section on the primary digital storage location of the respective system;
providing a boot manager and a recovery operating system on the secondary digital storage location of each system;
copying an image instance of operational software from the operational section of the primary digital storage location on the first system to the secondary digital storage location on the first system;
copying the image instance of from the secondary digital storage location on the first system to the secondary digital storage location on the second system;
booting the second system from the secondary digital storage location with the boot manager to load the recovery operating system; and
copying the image instance, using the recovery operating system, from the secondary digital storage location on the second system to the primary digital storage location on the second system to enable the second system to operate using the operational software from the first system.

15. The system of claim 14, wherein the first system and the second system are comprised of at least one of physical hardware and virtual hardware.
